# EUROPEAN PATENT SPECIFICATION

(11) **EP 4 364 395 B1**
(45) Date of publication and mention of the grant of the patent: **05.11.2025**
(21) Application number: 22853409.5
(22) Date of filing: 02.08.2022
(51) Int. Cl.: H04M 3/56, H04M 1/60, H04M 1/72409, H04M 1/72454, H04R 5/04

(54) **SYSTEM AND METHOD FOR ESTABLISHING CALL AUDIO SHARING USING BLUETOOTH LOW ENERGY AUDIO TECHNOLOGY**
SYSTEM UND VERFAHREN ZUR HERSTELLUNG EINER GEMEINSAMEN ANRUFAUDIONUTZUNG UNTER VERWENDUNG VON BLUETOOTH-AUDIOTECHNOLOGIE MIT NIEDRIGER ENERGIE
SYSTÈME ET PROCÉDÉ D'ÉTABLISSEMENT DE PARTAGE D'AUDIO D'APPEL À L'AIDE D'UNE TECHNOLOGIE AUDIO BLUETOOTH À FAIBLE ÉNERGIE

(30) Priority: 02.08.2021 IN 202141034776; 21.07.2022 IN 202141034776
(43) Date of publication of application: 08.05.2024
(73) Proprietor: Samsung Electronics Co., Ltd., Suwon-si, Gyeonggi-do 16677 (KR)
(72) Inventor: KALAIMANI, Ravikumar, Bengaluru, Karnataka 560037 (IN); SERIKAR, Pramod Reddy, Bengaluru, Karnataka 560037 (IN); CHILAKANTI, Veerabhadrappa, Bengaluru, Karnataka 560037 (IN); SIRUR, Shruthi, Bengaluru, Karnataka 560037 (IN); ANANDHA BABU, Gowtham, Bengaluru, Karnataka 560037 (IN); JUTURU, Gurumani Lakshmi Praneeth, Bengaluru, Karnataka 560037 (IN); SRIRAM, Srihari, Bengaluru, Karnataka 560037 (IN)
(74) Representative: Gulde & Partner
(86) International application number: PCT/KR2022/011358
(87) International publication number: WO 2023/014032

(56) References cited:
- WO-A1-2020/113588
- CN-A- 113 055 831
- CN-B- 110 381 485
- US-A1- 2012 269 359
- US-A1- 2020 045 159

## Description

### [Technical Field]

The present disclosure relates to an electronic device, and more specifically to a method and a Low Energy (LE) audio headset for call sharing to other LE audio headsets.

### [Background Art]

Bluetooth special interest group introduces isochronous channels to transfer time bounded data between Low Energy (LE) audio devices. A Connected Isochronous stream (CIS) connection is a connection established by a central device (e.g. smartphone) with a peripheral device (e.g. LE audio headset) using the isochronous channels. In case of Truly Wireless Stereo (TWS) earbud, the central device creates two CIS connections with each of left and right earbuds. Both the CIS connections are part of a group called Connected Isochronous Group (CIG) in which the two CIS connections are synchronized to timing assigned by the central device.

Conventional methods are known from US 2012/269359 A1.

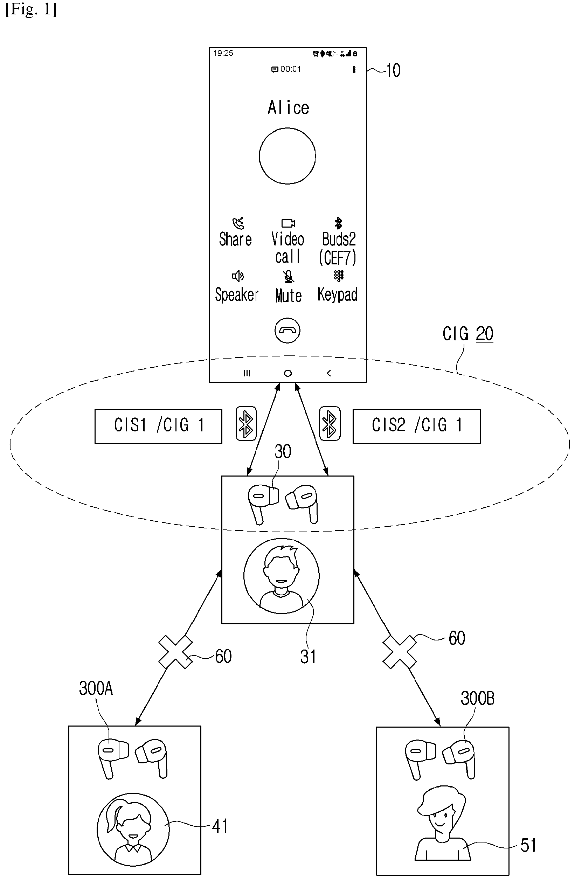

FIG. 1 illustrates a problem in conventional LE audio headsets. Consider, a pair of primary LE audio headsets (30) and a user device (10) (e.g. smartphone) are used by a user-1 (31), whereas a pair of secondary LE audio headsets (300A) is used by a user-2 (41), and a pair of secondary LE audio headsets (300B) is used by a user-3 (51). The user device (10) is connected with the pair of primary LE audio headsets (30) using two CIS connections (CIS1, CIS2) established from the user device (10), where the CIS1 and the CIS2 belong to a primary CIG (20). Consider, that the user device (10) receives the call from a contact named Alice. The pairs of the secondary LE audio headsets (300A-300B) are nearby to the pair of primary LE audio headsets (100). The user-1 (31) wants to add the user-2 (41) and the user-3 (51) in the ongoing call. Even the user-2 (41) and the user-3 (51) have their own LE audio headsets (300A-300B) and are nearby to the primary LE audio headset (30), the primary LE audio headset (30) is not capable to share the call to the LE audio headsets (300A-300B). Hence, the user-1 (31) puts the call on speaker mode in the user device (10) and allows the user-2 (41) and the user-3 (51) to listen/speak to a caller.

Since each user (1-3) is sitting at a varied distance/orientation from the user device (10), putting the call on the speaker mode will induce some problems like users (1-3) may not hear the audio in the call properly. Also, the call will not be audible at the caller end as a lot of noise is also added when the users (1-3) are talking on the speaker call. Hearing aid persons will not be comfortable for talking with the call put on the speaker mode. Also, another person located nearby to the user device (10) can also listen to discussion in the call, which degrades privacy of the call. Thus, it is desired to provide a solution for the aforementioned problems.

### [Disclosure]

### [Technical Problem]

The principal object of the embodiments herein is to provide a method and a Low Energy (LE) audio headset for call sharing to other LE audio headsets. The proposed method allows a user to share a call from the primary LE audio headset of the user to secondary LE audio headsets of nearby selected members. So that the user needs not to put the call on speaker mode to allow nearby members to speak/listen to a caller. Due to not putting in the speaker mode, the audio of the call will not deliver to a person who the user does not wish to listen/speak in the call, which enhances privacy of the call.

Another object of the embodiments herein is to flawlessly synchronize voice in the call by allowing the primary LE audio headset to create a secondary CIG for a user device (e.g. smartphone), the primary LE audio headset, and the secondary LE audio headsets in the secondary CIG and share the call to members in the secondary CIG. The primary LE audio headset determines a synchronization delay based on a source of audio in the call and number of members in the secondary CIG. Also, the primary LE audio headset optimizes codec configuration settings and QoS parameters in the secondary CIG based on the number of secondary headsets to reduce latency. Thus, the primary LE audio headset is able to stream the audio of the call to all members in the secondary CIG and the caller in a time-synchronized manner based on the synchronization delay.

Another object of the embodiments herein is to preconfigure the secondary LE audio headsets with the user device. Further, whenever the call is detected, the primary LE audio headset shares the call to the preconfigured secondary LE audio headsets that are nearby to the primary LE audio headset immediately based on a user gesture performed on the primary LE audio headset, which enhances the user experience.

Another object of the embodiments herein is to assist people with hearing disability by directly transferring the call audio to their proposed method enabled hearing aids, where the people with hearing disability face difficulty in hearing the voice when the call puts on the speaker mode.

### [Technical Solution]

Accordingly, the embodiments herein provide a method for call sharing between Low Energy (LE) audio headsets. The method includes receiving, by a primary LE audio headset connected with a user device (e.g. smartphone) over a primary Connected Isochronous Group (CIG), a request message for sharing a call receiving at the user device with secondary LE audio headsets from the user device. The method includes connecting, by the primary LE audio headset, to the secondary LE audio headsets over a secondary CIG for establishing a combined call between the primary LE audio headset and the secondary LE audio headsets, wherein receiving, by the primary LE audio headset, the request message for sharing the call receiving at the user device with the at least one secondary LE audio headset from the user device, comprises: receiving, by the primary LE audio headset, a synchronization delay of the primary CIG from the user device; and receiving, by the primary LE audio headset, the request message comprising a list of the at least one secondary LE audio headset in proximity of the primary LE audio headset from the user device for creation of the secondary CIG.

In an embodiment, where the method includes optimizing, by the primary LE audio headset, codec configuration settings, and Quality of Service (QoS) parameters in the secondary CIG based on a number of the secondary LE audio headsets to reduce latency in LE audio communication.

In an embodiment, where receiving, by the primary LE audio headset, the request message for sharing the call ongoing at the user device with the secondary LE audio headsets from the user device includes receiving, by the primary LE audio headset, a gesture from a user; sending, by the primary LE audio headset, a call sharing enable request message to the user device, wherein the user device automatically selects the secondary LE audio headsets pre-configured at the user device and located in proximity of the primary LE audio headset upon receiving the call sharing enable request message and sends the request message; and receiving, by the primary LE audio headset, the request message from the user device.

In an embodiment, where the call receiving at the user device is an ongoing call or an incoming call.

Accordingly, the embodiments herein provide the primary LE audio headset for call sharing. The LE audio headset includes a call sharing controller, a memory, and a processor, where the call sharing controller is coupled to the memory and the processor. The call sharing is configured for receiving the request message for sharing the call receiving at the user device with the secondary LE audio headsets from the user device, where the primary LE audio headset is connected with the user device over the primary CIG. The call sharing is configured for connecting to the secondary LE audio headsets over the secondary CIG for establishing the combined call between the primary LE audio headset and the secondary LE audio headsets, wherein receiving the request message for sharing the call receiving at the user device with the at least one secondary LE audio headset from the user device, comprises: receiving a synchronization delay of the primary CIG from the user device; and receiving the request message comprising a list of the at least one secondary LE audio headset in proximity of the primary LE audio headset from the user device for creation of the secondary CIG.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments, and the embodiments herein include all such modifications.

### [Description of Drawings]

This invention is illustrated in the accompanying drawings, throughout which like reference letters indicate corresponding parts in the various figures. The embodiments herein will be better understood from the following description with reference to the drawings, in which:
FIG. 1 illustrates a problem in conventional LE audio headsets, according to prior art;
FIG. 2 is a block diagram of a primary LE audio headset for sharing a call to other LE audio headsets, according to an embodiment as disclosed herein;
FIG. 3 is a flow diagram illustrating a method for call sharing between the LE audio headsets, according to an embodiment as disclosed herein;
FIG. 4 is a sequential diagram illustrating signalling between a user device, the primary LE audio headset, and secondary LE audio headsets for call sharing based on a trigger at the user device, according to an embodiment as disclosed herein;
FIG. 5 illustrates an example scenario of call sharing based on the trigger at the user device, according to an embodiment as disclosed herein;
FIG. 6 is a sequential diagram illustrating signalling between a user device, the primary LE audio headset, and secondary LE audio headsets for call sharing based on a trigger at the primary LE audio headset, according to an embodiment as disclosed herein;
FIG. 7 illustrates an example scenario of call sharing based on the trigger at the primary LE audio headset, according to an embodiment as disclosed herein;
FIG. 8 is a flow diagram illustrating a method for call sharing by the user device, according to an embodiment as disclosed herein;
FIG. 9 is a flow diagram illustrating a method for call sharing by the primary LE audio headset, according to an embodiment as disclosed herein;
FIG. 10 illustrates a timing diagram of synchronized rendering of incoming audio from a user device in a primary CIG event to both primary LE audio headset as well as all secondary LE audio headsets at secondary CIG synchronization point, according to an embodiment as disclosed herein;
FIG. 11 is a flow diagram illustrating a method for determining the synchronization delay of the secondary CIG for broadcasting the audio of the call received from the user device, according to an embodiment as disclosed herein;
FIG. 12 illustrates a timing diagram of synchronized rendering of incoming audio from the primary LE audio headset device in secondary CIG event to both secondary LE audio headsets as well as the user device at secondary CIG synchronization point, according to an embodiment as disclosed herein;
FIG. 13 is a flow diagram illustrating a method for determining the synchronization delay of the secondary CIG for broadcasting the audio generated at the primary LE audio headset, according to an embodiment as disclosed herein;
FIG. 14 illustrates a timing diagram of mixing of incoming audio from secondary LE Audio headsets in secondary CIG event and incoming audio from user device in primary CIG event M+1 at primary CIG event M+1 synchronization points and render the audio to other devices at CIG event N+1 synchronization point, according to an embodiment as disclosed herein; and
FIG. 15 is a flow diagram illustrating a method for determining the synchronization delay of the secondary CIG for receiving and broadcasting the audio generated at the user device, and the secondary LE audio headsets, according to an embodiment as disclosed herein.

### [Mode for Invention]

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings. As such, the present disclosure should be construed to extend to any alterations, and substitutes in addition to those which are particularly set out in the accompanying drawings. Although the terms primary, secondary, etc. may be used herein to describe various elements, these elements should not be limited by these terms. These terms are generally only used to distinguish one element from another.

Throughout this disclosure, the terms "LE audio headset" and "earbud" are used interchangeably and mean the same.

Accordingly, the embodiments herein provide a method for call sharing between Low Energy (LE) audio headsets. The method includes receiving, by a primary LE audio headset connected with a user device over a primary Connected Isochronous Group (CIG), a request message for sharing a call receiving at the user device with secondary LE audio headsets from the user device. The method includes connecting, by the primary LE audio headset, to the secondary LE audio headsets over a secondary CIG for establishing a combined call between the primary LE audio headset and the secondary LE audio headsets.

Accordingly, the embodiments herein provide the primary LE audio headset for call sharing. The LE audio headset includes a call sharing controller, a memory, and a processor, where the call sharing controller is coupled to the memory and the processor. The call sharing is configured for receiving the request message for sharing the call receiving at the user device with the secondary LE audio headsets from the user device, where the primary LE audio headset is connected with the user device over the primary CIG. The call sharing is configured for connecting to the secondary LE audio headsets over the secondary CIG for establishing the combined call between the primary LE audio headset and the secondary LE audio headsets.

Unlike existing methods and systems, the proposed method allows a user to share the call from the primary LE audio headset of the user to secondary LE audio headsets of nearby selected members. So that the user needs not to put the call on speaker mode to allow nearby members to speak/listen to a caller. Due to not putting in the speaker mode, the audio of the call will not deliver to a person who the user does not wish to listen/speak in the call, which enhances privacy of the call

Unlike existing methods and systems, the primary LE audio headset flawlessly synchronizes voice in the call by allowing the primary LE audio headset to create the secondary CIG for the user device, the primary LE audio headset, and the secondary LE audio headsets in the secondary CIG and shares the call to members in the secondary CIG. Further, the primary LE audio headset determines a synchronization delay based on a source of audio in the call and number of members in the secondary CIG. Also, the primary LE audio headset optimizes codec configuration settings and QoS parameters in the secondary CIG based on the number of secondary headsets to reduce latency. Thus, the primary LE audio headset is able to stream the audio of the call to all members in the secondary CIG and the caller in a time-synchronized manner based on the synchronization delay.

Unlike existing methods and systems, the proposed method allows the user device (e.g. smartphone) to preconfigure the secondary LE audio headsets. Whenever the call is detected, the primary LE audio headset shares the call to the preconfigured secondary LE audio headsets that are nearby to the primary LE audio headset immediately based on a user gesture performed on the primary LE audio headset, which enhances the user experience.

Also, the proposed method is useful for people with hearing disability by directly transferring the call audio to their proposed method enabled hearing aids, where the people with hearing disability face difficulty in hearing the voice when the call puts on the speaker mode.

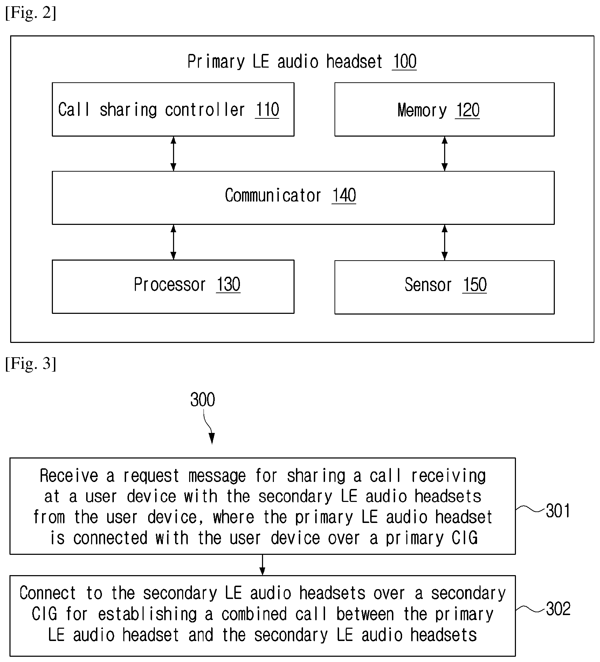

Referring now to the drawings, and more particularly to FIGS. 2 through 15, there are shown preferred embodiments.

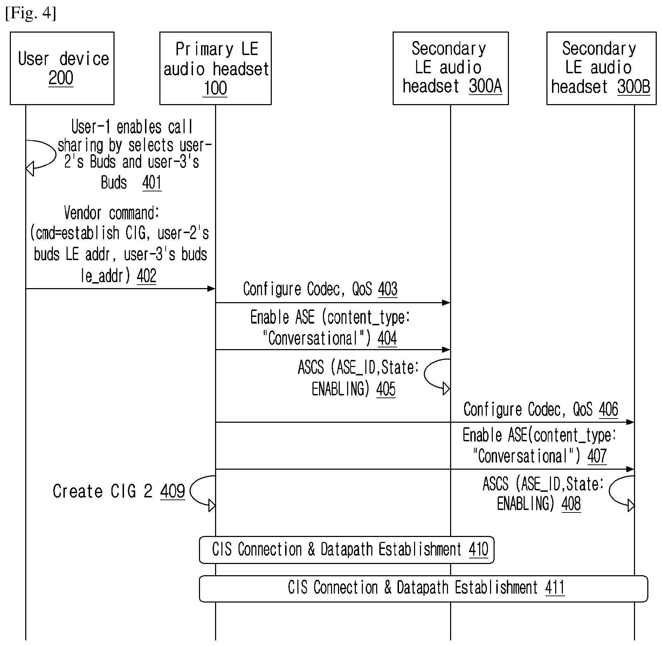

FIG. 2 is a block diagram of a primary LE audio headset (100) for sharing a call to other LE audio headsets (300A-300B), according to an embodiment as disclosed herein. The other LE audio headsets are called as secondary LE audio headsets (300A-300B) in this disclosure, refer to FIG. 4. Examples of the primary LE audio headset (100) and other LE audio headsets include, but are not limited to True Wireless Stereo (TWS) earbud pairs, wireless earbuds, Bluetooth earphones, etc. In an embodiment, the primary LE audio headset (100) includes a call sharing controller (110), a memory (120), a processor (130), a communicator (140), and a sensor (150), The sensor (150) is configured to receive user input (e.g. head gesture, finger tap) and provide a trigger to the primary LE audio headset (100) for sharing the call to the secondary LE audio headsets (300A-300B) pre-configured with the primary LE audio headset (100).

The call sharing controller (110) is implemented by processing circuitry such as logic gates, integrated circuits, microprocessors, microcontrollers, memory circuits, passive electronic components, active electronic components, optical components, hardwired circuits, or the like, and may optionally be driven by a firmware. The circuits may, for example, be embodied in one or more semiconductor chips, or on substrate supports such as printed circuit boards and the like.

The primary LE audio headset (100) is connected with a user device (200) over a primary Connected Isochronous Group (CIG). Examples of the user device (200) include, but are not limited to a smartphone, a tablet computer, a Personal Digital Assistance (PDA), a desktop computer, an Internet of Things (IoT), a wearable device, etc. The call sharing controller (110) receives a request message for sharing a call receiving at the user device (200) with secondary LE audio headsets (300A-300B) from the user device (200), where the call receiving at the user device (200) is an ongoing call or an incoming call. In an embodiment, the call sharing controller (110) receives a gesture from a user. Further, the call sharing controller (110) sends a call sharing enable request message to the user device (200), where the user device (200) automatically selects the secondary LE audio headsets (300A-300B) pre-configured at the user device (200) and located in proximity of the primary LE audio headset (100) upon receiving the call sharing enable request message and sends the request message. Further, the call sharing controller (110) receives the request message from the user device (200). Upon receiving the request message, the call sharing controller (110) connects to the secondary LE audio headsets (300A-300B) over a secondary CIG for establishing a combined call between the primary LE audio headset (100) and the secondary LE audio headsets (300A-300B).

In an embodiment, the call sharing controller (110) is configured for optimizing codec configuration settings and Quality of Service (QoS) parameters in the secondary CIG based on a number of the secondary LE audio headsets (300A-300B) to reduce latency in LE audio communication.

According to the invention, for receiving the request message for sharing the call receiving at the user device (200) with the secondary LE audio headsets (300A-300B) from the user device (200), the call sharing controller (110) receives a synchronization delay of the primary CIG from the user device (200). Further, the call sharing controller (110) receives the request message including a list of the secondary LE audio headsets (300A-300B) in proximity of the primary LE audio headset (100) from the user device (200) for creation of the secondary CIG.

In an embodiment, for connecting to the secondary LE audio headsets (300A-300B) over the secondary CIG for establishing the combined call between the primary LE audio headset (100) and the secondary LE audio headsets (300A-300B), the call sharing controller (110) creates the secondary CIG between the primary LE audio headset (100), the secondary LE audio headsets (300A-300B), and the user device (200). Further, the call sharing controller (110) determines a synchronization delay of the secondary CIG based on a number of the secondary LE audio headsets (300A-300B). Further, the call sharing controller (110) sends the synchronization delay of the secondary CIG to the secondary LE audio headsets (300A-300B) and the user device (200). Further, the call sharing controller (110) renders audio received from the user device (200) in the primary LE audio headset (100) and the secondary LE audio headsets (300A-300B) based on the synchronization delay of the secondary CIG.

In an embodiment, for rendering the audio of the call together in the primary LE audio headset (100) and the secondary LE audio headsets (300A-300B) based on the synchronization delay of the secondary CIG, the call sharing controller (110) receives audio from the secondary LE audio headsets (300A-300B). Further, the call sharing controller (110) renders the received audio and the audio of the call together in the primary LE audio headset (100), and the user device (200) based on the synchronization delay of the secondary CIG.

In another embodiment, for rendering the audio of the call together in the primary LE audio headset (100) and the secondary LE audio headsets (300A-300B) based on the synchronization delay of the secondary CIG, the call sharing controller (110) receives audio of a user (i.e. user-1). Further, the call sharing controller (110) renders the received audio and the audio of the call together in the secondary LE audio headsets (300A-300B), and the user device (200) based on the synchronization delay of the secondary CIG.

In another embodiment, for rendering the received audio and the audio of the call together in the primary LE audio headset (100), and the user device (200) based on the synchronization delay of the secondary CIG, the call sharing controller (110) renders the received audio and the audio of the call together in the primary LE audio headset (100), the user device (200), and other secondary LE audio headset (300A-300B)(s) based on the synchronization delay of the secondary CIG when multiple secondary LE audio headset (300A-300B)s are present in the secondary CIG.

The memory (120) stores details of the secondary LE audio headsets (300A-300B) pre-configured with the primary LE audio headset (100). The memory (120) stores instructions to be executed by the processor (130). The memory (120) may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory (120) may, in some examples, be considered a non-transitory storage medium. The term "non-transitory" may indicate that the storage medium is not embodied in a carrier wave or a propagated signal. However, the term "non-transitory" should not be interpreted that the memory (120) is non-movable. In some examples, the memory (120) can be configured to store larger amounts of information than its storage space. In certain examples, a non-transitory storage medium may store data that can, over time, change (e.g., in Random Access Memory (RAM) or cache). The memory (120) can be an internal storage unit or it can be an external storage unit of the primary LE audio headset (100), a cloud storage, or any other type of external storage.

The processor (130) is configured to execute instructions stored in the memory (120). The processor (130) may be a general-purpose processor, such as a Central Processing Unit (CPU), an Application Processor (AP), or the like, a graphics-only processing unit such as a Graphics Processing Unit (GPU), a Visual Processing Unit (VPU) and the like. The processor (130) may include multiple cores to execute the instructions. The communicator (140) is configured for communicating internally between hardware components in the primary LE audio headset (100). Further, the communicator (140) is configured to facilitate the communication between the primary LE audio headset (100) and other devices via one or more networks (e.g. Radio technology). The communicator (140) includes an electronic circuit specific to a standard that enables wired or wireless communication.

Although the FIG. 2 shows the hardware components of the primary LE audio headset (100) but it is to be understood that other embodiments are not limited thereon. In other embodiments, the primary LE audio headset (100) may include less or a greater number of components. Further, the labels or names of the components are used only for illustrative purpose and does not limit the scope of the invention. One or more components can be combined together to perform same or substantially similar function for sharing a call to other LE audio headsets (300A-300B).

FIG. 3 is a flow diagram (300) illustrating a method for call sharing between the LE audio headsets (100, 300A-300B), according to an embodiment as disclosed herein. In an embodiment, the method allows the call sharing controller (110) to perform steps 301-302 of the flow diagram (300). At step 301, the method includes receiving the request message for sharing the call receiving at the user device (200) with the secondary LE audio headsets (300A-300B) from the user device (200), where the primary LE audio headset (100) is connected with the user device (200) over the primary CIG. At step 302, the method includes connecting to the secondary LE audio headsets (300A-300B) over the secondary CIG for establishing the combined call between the primary LE audio headset (100) and the secondary LE audio headsets (300A-300B).

FIG. 4 is a sequential diagram illustrating signalling between the user device (200), the primary LE audio headset (100), and the secondary LE audio headsets (300A-300B) for call sharing based on the trigger at the user device (200), according to an embodiment as disclosed herein. Consider, that the primary LE audio headset (100) and the user device (200) are used by a user-1, whereas the secondary LE audio headset (300A) is used by a user-2, and the secondary LE audio headset (300B) is used by a user-3. The primary LE audio headset (100) sends a targeted announcement indicating availability of the primary LE audio headset (100) to the user device (200) for receiving the audio for context types: conversational (For receiving call audio), and an immediate alert (e.g. For receiving ringtone).

Later, an incoming call is detected on the user device (100) and immediately establishes a LE Asynchronous Connection Less (LE-ACL) connection with the primary LE audio headset (100) to send a call state, i.e. incoming notification to the primary LE audio headset (100). Further, the user device (200) configures codec parameters and enables Audio Stream Endpoint (ASE) for context type "immediate alert". Further, the user device (200) establishes a LE CIG by creating a Connected Isochronous Stream (CIS) with the primary LE audio headset (100), where the ringtone is audible on the primary LE audio headset (100). When the user-1 accepts the call, the ASE state moves to a streaming state. Meanwhile, consider the secondary LE audio headsets (300A-300B) send a general announcement indicating that the secondary LE audio headsets (300A-300B) are available to receive the audio for above mentioned context types.

Consider, at 401 the user-1 enables the call sharing feature at the user device (200) and selects the secondary LE audio headsets (300A-300B) upon receiving the general announcement. At 402, the user device (200) sends a vendor specific command to the primary LE audio headset (100) to establish the secondary CIG from the primary LE audio headset (100). The secondary CIG consists of the secondary LE audio headsets (300A-300B), the primary LE audio headset (100), and the user device (200).

At 403-404, the primary LE audio headset (100) configures codec, Quality of Service (QoS), and enables an ASE context type as "Conversational" at the secondary LE audio headset (300A). At 405, the secondary LE audio headset (300A) enables an Audio Stream Control Service (ASCS) Audio Stream Endpoint (ASE) Identifier (ID) state. At 406-407, the primary LE audio headset (100) configures the codec, the QoS, and enables the ASE context type as "Conversational" at the secondary LE audio headset (300B). At 408, the secondary LE audio headset (300B) enables the ASCS ASE ID state. At 409, the primary LE audio headset (100) creates the secondary CIG and sends the synchronization delay to the secondary LE audio headsets (300A-300B) and the user device (200), where the synchronization delay is sent for rendering the audio to all the secondary LE audio headsets (300A-300B) and the user device (200) and a caller at the same time.

At 410-411, the primary LE audio headset (100) creates multiple CIS connections with each secondary LE audio headset (300A-300B) and sets up an audio data path. The user device (200) forwards the incoming audio received from the user device (200) to the secondary LE audio headsets (300A-300B). Also, the user device (200) forwards the incoming audio coming from the secondary LE audio headsets (300A-300B) to the user device (200).

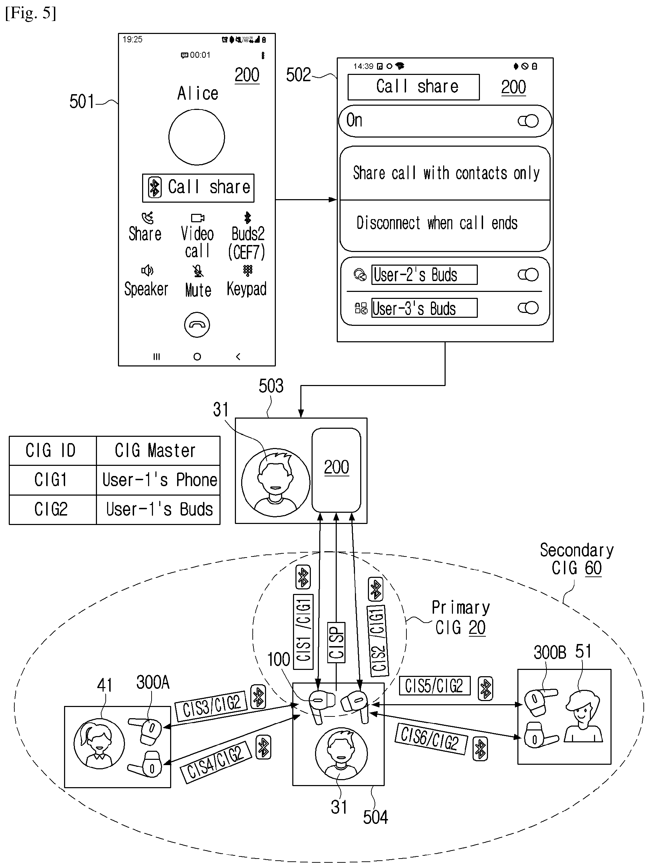

FIG. 5 illustrates an example scenario of call sharing based on the trigger at the user device (200), according to an embodiment as disclosed herein. Consider, a pair of primary LE audio headsets (100) and the user device (200) are used by the user-1 (31), whereas a pair of secondary LE audio headsets (300A) is used by the user-2 (41), and a pair of secondary LE audio headsets (300B) is used by the user-3 (51). The user device (200) is connected with the pair of primary LE audio headsets (100) using two CIS connections (CIS1, CIS2) established from the user device (200), where the CIS1 and the CIS2 belong to the primary CIG (20). At 501, the user device (200) receives the call from a contact named Alice. The pairs of the secondary LE audio headsets (300A-300B) are nearby to the pair of primary LE audio headsets (100). The user-1 (31) wants to add the user-2 (41) and the user-3 (51) in the call. At 502, the user-1 (31) opens the call sharing user interface in the user device (200) and selects the pairs of the secondary LE audio headsets (300A-300B) for sharing the call. At 503, the user device (200) requests the pair of primary LE audio headsets (100) to share the call with the pairs of the secondary LE audio headsets (300A-300B). Further, the pairs of the primary LE audio headset (100) create the secondary CIG (60), add the pairs of the secondary LE audio headsets (300A-300B) and the user device (200) in the secondary CIG (60), and establish two CIS connections (CIS3, CIS4) with the pair of secondary LE audio headsets (300A) and two CIS connections (CIS5, CIS6) with the pair of secondary LE audio headsets (300B).

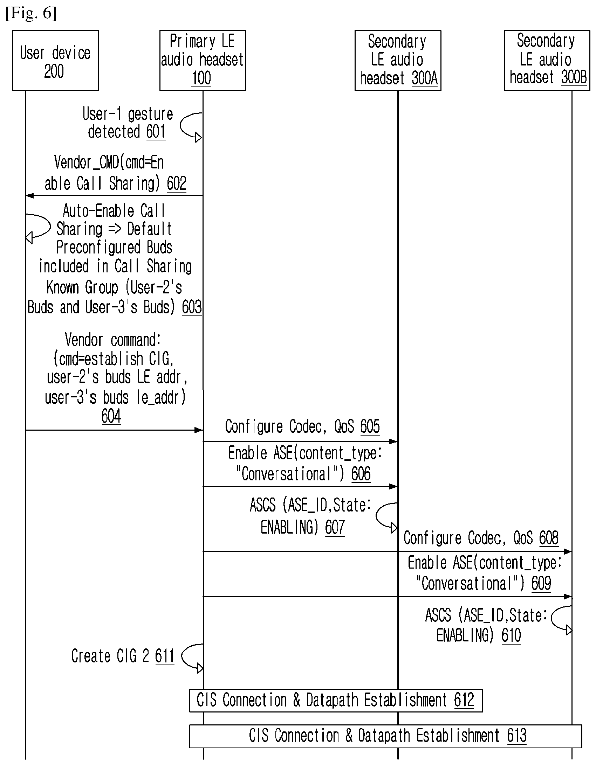

FIG. 6 is a sequential diagram illustrating signalling between the user device (200), the primary LE audio headset (100), and secondary LE audio headsets (300A-300B) for call sharing based on the trigger at the primary LE audio headset (100), according to an embodiment as disclosed herein. Consider, that the primary LE audio headset (100) and the user device (200) are used by the user-1, whereas the secondary LE audio headset (300A) is used by the user-2, and the secondary LE audio headset (300B) is used by the user-3. The primary LE audio headset (100) sends the targeted announcement indicating availability of the primary LE audio headset (100) to the user device (200) for receiving the audio for context types: conversational (For receiving call audio), and the immediate alert (e.g. For receiving ringtone). Also, the secondary LE audio headset (300A) are pre-configured with the primary LE audio headset (100) via the user device (200).

Later, the incoming call is detected on the user device (100) and immediately establishes the LE-ACL connection with the primary LE audio headset (100) to send the call state, i.e. incoming notification to the primary LE audio headset (100). Further, the user device (200) configures the codec parameters and enables the ASE for context type "immediate alert". Further, the user device (200) establishes the LE CIG by creating the CIS with the primary LE audio headset (100), where the ringtone is audible on the primary LE audio headset (100). When the user-1 accepts the call, the ASE state moves to the streaming state. Meanwhile, consider the secondary LE audio headsets (300A-300B) send the general announcement indicating that the secondary LE audio headsets (300A-300B) are available to receive the audio for above mentioned context types.

The user-1 performs the gesture on the primary LE audio headset (100). Upon detecting the gesture at 601, the primary LE audio headset (100) sends the vendor specific command to the user device (200) to enable the call sharing at 602. At 603, the user device (200) auto enables the call sharing feature by selecting the pre-configured secondary LE audio headsets (300A-300B) to be part of the call sharing group. At 604, the user device (200) sends the vendor specific command to the primary LE audio headset (100) to establish the secondary CIG from the primary LE audio headset (100). The secondary CIG consists of the secondary LE audio headsets (300A-300B), the primary LE audio headset (100), and the user device (200).

At 605-606, the primary LE audio headset (100) configures the codec, the QoS, and enables the ASE context type as "Conversational" at the secondary LE audio headset (300A). At 607, the secondary LE audio headset (300A) enables the ASCS enabling state. At 608-609, the primary LE audio headset (100) configures the codec, the QoS, and enables the ASE context type as "Conversational" at the secondary LE audio headset (300B). At 610, the secondary LE audio headset (300B) enables the ASCS enabling state. At 611, the primary LE audio headset (100) creates the secondary CIG and sends the synchronization delay to the secondary LE audio headsets (300A-300B) and the user device (200), where the synchronization delay is sent for rendering the audio to all the secondary LE audio headsets (300A-300B) and the user device (200) and a caller at the same time.

At 612-613, the primary LE audio headset (100) creates the multiple CIS connections with each secondary LE audio headset (300A-300B) and sets up the audio data path. The user device (200) forwards the incoming audio received from the user device (200) to the secondary LE audio headsets (300A-300B). Also, the user device (200) forwards the incoming audio coming from the secondary LE audio headsets (300A-300B) to the user device (200).

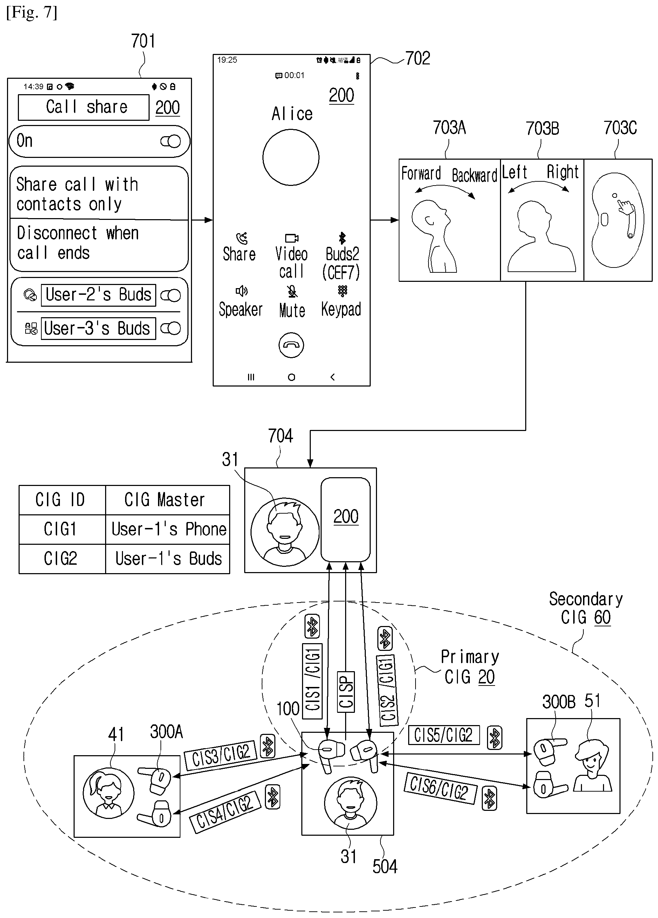

FIG. 7 illustrates an example scenario of call sharing based on the trigger at the primary LE audio headset (100), according to an embodiment as disclosed herein. Consider, the pair of primary LE audio headsets (100) and the user device (200) are used by the user-1 (31), whereas the pair of secondary LE audio headsets (300A) is used by the user-2 (41), and the pair of secondary LE audio headsets (300B) is used by the user-3 (51). The user device (200) is connected with the pair of primary LE audio headsets (100) using the two CIS connections (CIS1, CIS2) established from the user device (200), where the CIS1 and the CIS2 are belong to the primary CIG (20). At 701, the pairs of the secondary LE audio headsets (300A-300B) are pre-configured with the one of the primary LE audio headset (100) via the user device (200) for sharing the call. At 702, the user device (200) receives the call from the contact named Alice. The pairs of the secondary LE audio headsets (300A-300B) are nearby to the pair of primary LE audio headsets (100). The user-1 (31) wants to add the user-2 (41) and the user-3 (51) in the call. Further, the user-1 (31) performs the gesture on at least one of the primary LE audio headset (100) for sharing the call. The gesture can be a backward-forward head motion (703A), or a left-right head motion (703B), or a finger tap (703C). At 704, the pairs of the primary LE audio headset (100) create the secondary CIG (60), add the pre-configured secondary LE audio headsets (300A-300B) and the user device (200) in the secondary CIG (60), and establish the two CIS connections (CIS3, CIS4) with the pair of secondary LE audio headsets (300A) and the two CIS connections (CIS5, CIS6) with the pair of secondary LE audio headsets (300B).

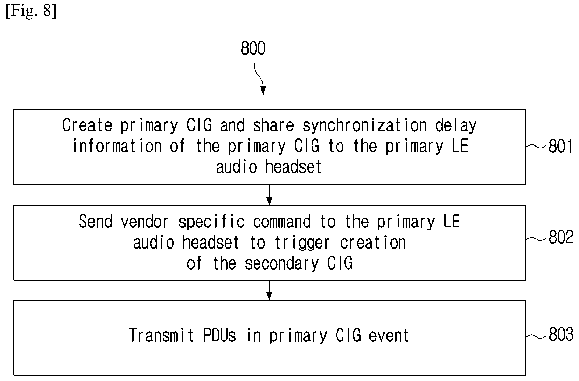

FIG. 8 is a flow diagram (800) illustrating a method for call sharing by the user device (200), according to an embodiment as disclosed herein. The user device (200) performs the steps 801-803 of the flow diagram (800). At 801, the method includes creating the primary CIG and sharing the synchronization delay of the primary CIG to the primary LE audio headset (100). At 802, the method includes sending the vendor specific command to the primary LE audio headset (100) to trigger the creation of the secondary CIG. At 803, the method includes transmitting Packet Data Units PDUs of the audio received at the user device (200) in a primary CIG event. The audio received at the user device (200) is sent to the primary LE audio headset (100) in the primary CIG event. A CIG event consists of corresponding CIS events of the CISs currently making up that CIG. A CIS event is an opportunity for a Central and Peripheral devices to exchange the CIS PDUs.

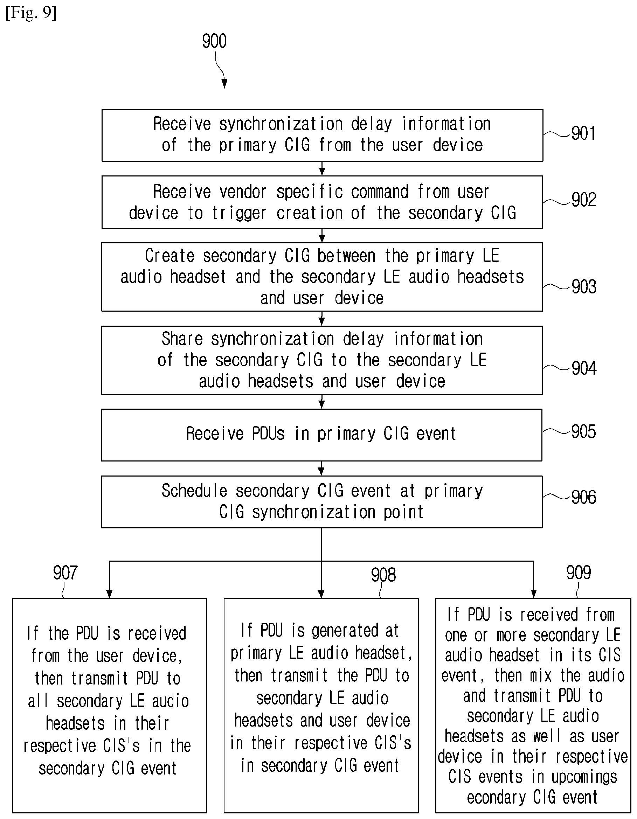

FIG. 9 is a flow diagram (900) illustrating a method for call sharing by the primary LE audio headset (100), according to an embodiment as disclosed herein. The primary LE audio headset (100) performs the steps 901-909 of the flow diagram (900). At 901, the method includes receiving the synchronization delay of the primary CIG from the user device (100). At 902, the method includes receiving the vendor specific command from the user device (100) to trigger the creation of the secondary CIG. At 903, the method includes creating the secondary CIG between the primary LE audio headset (100) and the secondary LE audio headsets (300A-300B) and the user device (200). At 904, the method includes sharing the synchronization delay of the secondary CIG to the secondary LE audio headsets (300A-300B) and the user device (200).

At 905, the method includes receiving the PDUs in the primary CIG event. At 906, the method includes scheduling a secondary CIG event at a primary CIG synchronization point. The secondary CIG event corresponds to all CIS events of all CIS's which are part of the secondary CIG. The synchronization point is a time reference of an SDU that allows synchronization of isochronous data in multiple devices. At 907, if the PDU is received from the user device (100), then the method includes transmitting the PDU to the secondary LE audio headsets (300A-300B) in their respective CIS's in the secondary CIG event. At 908, if the PDU is generated at the primary LE audio headset (100), then the method includes transmitting the PDU to the secondary LE audio headsets and the user device in their respective CIS's in the secondary CIG event. At 909, if the PDU is received from one or more secondary LE audio headset (300A-300B) in its CIS event, then the method includes mixing the audio and transmitting the PDU to the secondary LE audio headsets (300A-300B) as well as the user device (100) in their respective CIS events in upcoming secondary CIG event.

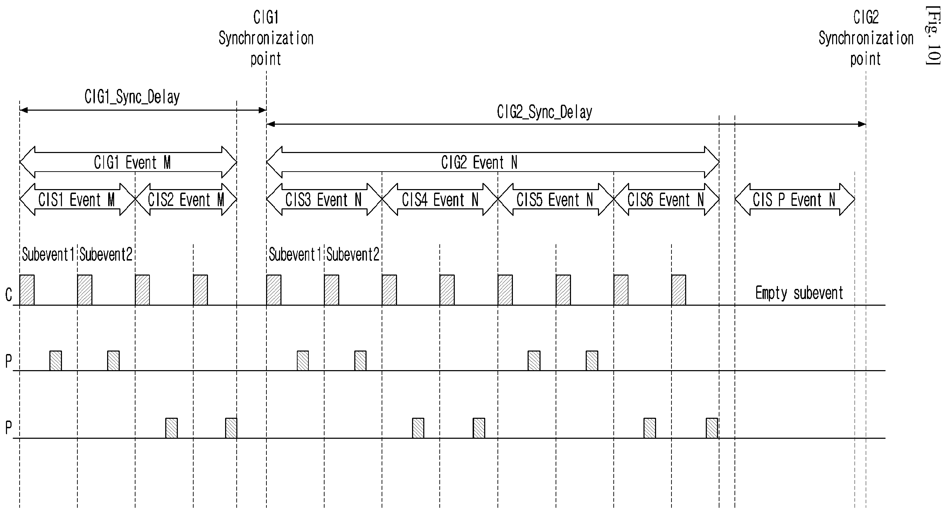

FIG. 10 illustrates a timing diagram of synchronized rendering of incoming audio from the user device (200) in the primary CIG event to both the primary LE audio headset (100) as well as all secondary LE audio headset (300A-300B) at a secondary CIG synchronization point, according to an embodiment as disclosed herein. C represents a central role device. P represents a peripheral role device. The primary CIG is a CIG between the user device (200) and pair of primary LE audio headsets (100), in which the user device (200) is the central role device, and the pair of primary LE audio headsets (100) is the peripheral role device. The secondary CIG is a CIG between the pair of primary LE audio headsets (100), the user device (200) and the pairs of secondary LE audio headset (300A-300B), in which the pair of primary LE audio headsets (100) is the central role device, and the user device (200) and the pairs of secondary LE audio headset (300A-300B) are the peripheral role device. CIS1 and CIS2 are connected isochronous streams between the user device (200) and the pair of primary LE audio headset (100). CIS3, CIS4 are the connected isochronous streams between the pair of primary LE audio headsets (100) and one pair of the secondary LE audio headsets (300A). CIS5, CIS6 are connected isochronous streams between the pair of primary LE audio headsets (100) and another pair of the secondary LE audio headsets (300B). CISP is a connected isochronous stream between the pair of primary LE audio headsets (100) and the user device (100) belonging to the secondary CIG. CIG1_Sync_Delay is a maximum time in microseconds required for transmission of the PDUs of all CISs in the primary CIG. CIG2_Sync_Delay is a maximum time in microseconds required for transmission of PDUs of all CISs in the secondary CIG.

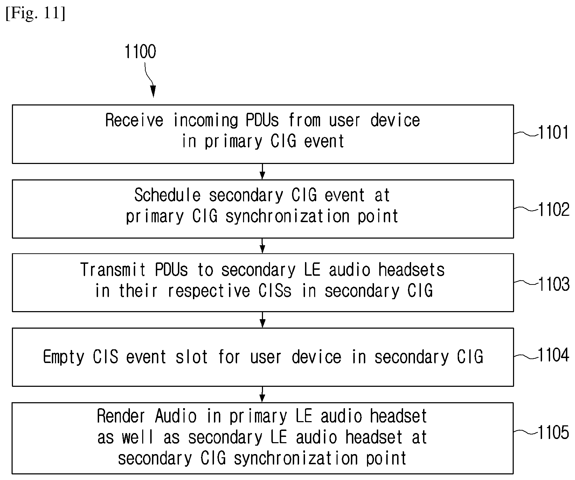

FIG. 11 is a flow diagram (1100) illustrating a method for determining the synchronization delay of the secondary CIG for broadcasting the audio of the call received from the user device (200), according to an embodiment as disclosed herein. The primary LE audio headset (100) performs the steps 1101-1105 of the flow diagram (1100). At 1101, the method includes receiving the incoming PDUs from the user device (200) in the primary CIG event. At 1102, the method includes scheduling the secondary CIG event at the primary CIG synchronization point. At 1103, the method includes transmitting the PDUs to the secondary LE audio headsets (300A-300B) in their respective CISs in the secondary CIG. At 1104, the method includes emptying the CIS event slot for the user device (200) in the secondary CIG. At 1105, the method includes rendering the audio in the primary LE audio headset (100) as well as the secondary LE audio headsets (300A-300B) at a secondary CIG synchronization point. The CIG synchronization point is a time reference of an SDU that allows synchronization of isochronous data in multiple devices. Total synchronization delay determined as synchronization delay in the primary CIG + synchronization delay in the secondary CIG.

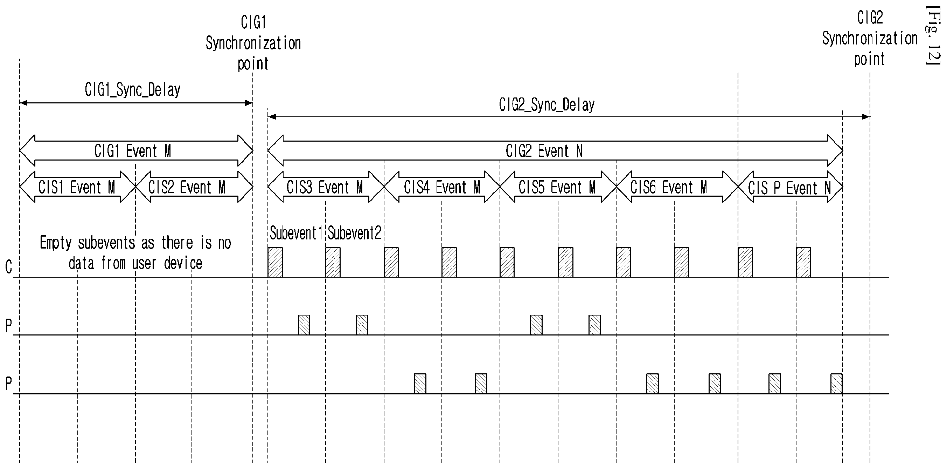

FIG. 12 illustrates a timing diagram of synchronized rendering of the incoming audio from the primary LE audio headset device (100) in the secondary CIG event to both secondary LE audio headsets (300A-300B) as well as the user device (200) at the secondary CIG synchronization point, according to an embodiment as disclosed herein. C represents a central role device. P represents a peripheral role device. The primary CIG is a CIG between the user device (200) and pair of primary LE audio headsets (100), in which the user device (200) is the central role device, and the pair of primary LE audio headsets (100) is the peripheral role device. The secondary CIG is a CIG between the pair of primary LE audio headsets (100), the user device (200) and the pairs of secondary LE audio headset (300A-300B), in which the pair of primary LE audio headsets (100) is the central role device, and the user device (200) and the pairs of secondary LE audio headset (300A-300B) are the peripheral role device. CIS1 and CIS2 are connected isochronous streams between the user device (200) and the pair of primary LE audio headsets (100). CIS3, CIS4 are the connected isochronous streams between the pair of primary LE audio headsets (100) and one pair of the secondary LE audio headsets (300A). CIS5, CIS6 are connected isochronous streams between the pair of primary LE audio headsets (100) and another pair of the secondary LE audio headsets (300B). CISP is a connected isochronous stream between the pair of primary LE audio headsets (100) and the user device (100) belonging to the secondary CIG. CIG1_ Sync_Delay is a maximum time in microseconds required for transmission of the PDUs of all CISs in the primary CIG. CIG2_Sync Delay is a maximum time in microseconds required for transmission of PDUs of all CISs in the secondary CIG.

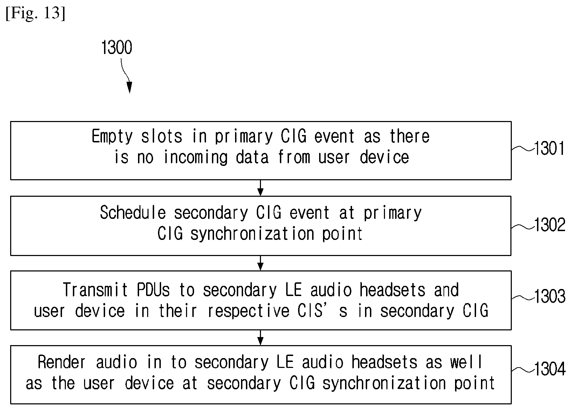

FIG. 13 is a flow diagram (1300) illustrating a method for determining the synchronization delay of the secondary CIG for broadcasting the audio generated at the primary LE audio headset (100), according to an embodiment as disclosed herein. The primary LE audio headset (100) performs the steps 1301-1304 of the flow diagram (1300). At 1301, the method includes emptying slots in the primary CIG event as there is no incoming data from the user device (200). At 1302, the method includes scheduling the secondary CIG event at the primary CIG synchronization point. At 1303, the method includes transmitting the PDUs to the secondary LE audio headsets (300A-300B) and the user device (200) in their respective CISs in the secondary CIG. At 1304, the method includes rendering the audio in to the secondary LE audio headsets (300A-300B) as well as the user device (200) at the secondary CIG synchronization point. Total synchronization delay determined as the synchronization delay in the secondary CIG.

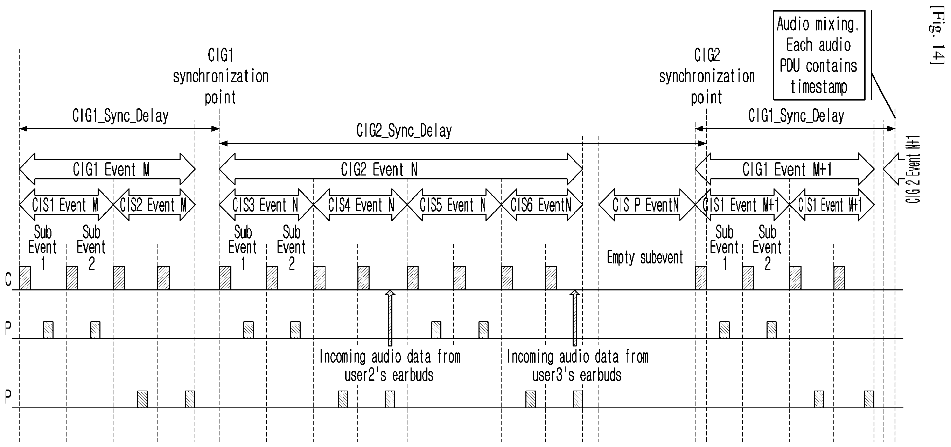

FIG. 14 illustrates a timing diagram of mixing of the incoming audio from the secondary LE Audio headsets (300A-300B) in the secondary CIG event and the incoming audio from the user device (200) in the primary CIG event M+1 at the primary CIG event M+1 synchronization points and render the audio to other devices at CIG event N+1 synchronization point, according to an embodiment as disclosed herein. C represents a central role device. P represents a peripheral role device. The primary CIG is a CIG between the user device (200) and pair of primary LE audio headsets (100), in which the user device (200) is the central role device, and the pair of primary LE audio headsets (100) is the peripheral role device. The secondary CIG is a CIG between the pair of primary LE audio headsets (100), the user device (200) and the pairs of secondary LE audio headset (300A-300B), in which the pair of primary LE audio headsets (100) is the central role device, and the user device (200) and the pairs of secondary LE audio headset (300A-300B) are the peripheral role device. CIS1 and CIS2 are connected isochronous streams between the user device (200) and the pair of primary LE audio headsets (100). CIS3, CIS4 are the connected isochronous streams between the pair of primary LE audio headsets (100) and one pair of the secondary LE audio headsets (300A). CIS5, CIS6 are connected isochronous streams between the pair of primary LE audio headsets (100) and another pair of the secondary LE audio headsets (300B). CISP is a connected isochronous stream between the pair of primary LE audio headsets (100) and the user device (100) belonging to the secondary CIG. CIG1_Sync_Delay is a maximum time in microseconds required for transmission of the PDUs of all CISs in the primary CIG. CIG2_Sync Delay is a maximum time in microseconds required for transmission of PDUs of all CISs in the secondary CIG.

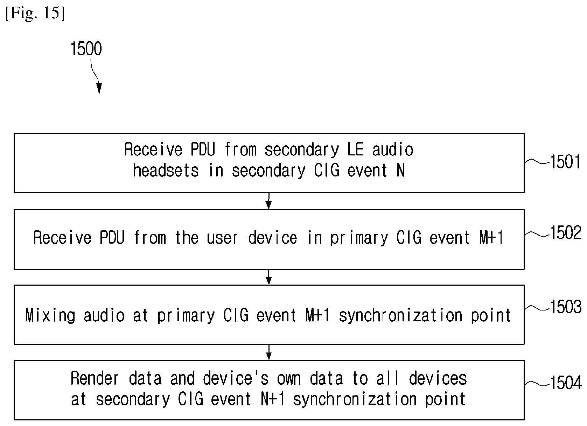

FIG. 15 is a flow diagram (1500) illustrating a method for determining the synchronization delay of the secondary CIG for receiving and broadcasting the audio generated at the user device (200), and the secondary LE audio headsets (300A-300B), according to an embodiment as disclosed herein. The primary LE audio headset (100) performs the steps 1501-1504 of the flow diagram (1500). At 1501, the method includes receiving the PDU from the secondary LE audio headsets (300A-300B) in a secondary CIG event N. At 1502, the method includes receiving the PDU from the user device (200) in a primary CIG event M+1. At 1503, the method includes mixing the audio at the primary CIG event M+1 synchronization point. At 1504, the method includes rendering the data and the device's own data to all devices (100, 200, 300A-300B) at a secondary CIG event N+1 synchronization point. Total synchronization delay for the secondary LE audio headsets (300A) is determined as (2 x synchronization delay in the secondary CIG) + synchronization delay in the primary CIG - (NSE x 1 x minimum subevent length). NSE represents number of subevents. The CIS event is an opportunity for master and slave devices to exchange CIS PDUs. Each CIS event in turn contains the NSE subevents. Each subevent can be used to transmit a CIS PDU from the master device to the slave device followed by a response from the slave device to the master device. The minimum subevent length is a minimum time interval of a subevent.
Total synchronization delay for the secondary LE audio headsets (300B) is determined as (2 x synchronization delay in the secondary CIG) + synchronization delay in the primary CIG - (NSE x 3 x minimum subevent length).
The various actions, acts, blocks, steps, or the like in the flow diagrams (300, 800, 900, 1100, 1300, and 1500) may be performed in the order presented, in a different order, or simultaneously. Further, in some embodiments, some of the actions, acts, blocks, steps, or the like may be omitted, added, modified, skipped, or the like without departing from the scope of the invention. The embodiments disclosed herein can be implemented using at least one hardware device and performing network management functions to control the elements.
The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A method for call sharing between Low Energy, LE, audio headsets (100, 300A-300B), comprises:
receiving (301), by a primary LE audio headset (100) connected with a user device (200) over a primary Connected Isochronous Group, CIG, a request message for sharing a call receiving at the user device (200) with at least one secondary LE audio headset (300A-300B) from the user device (200); and
connecting (302), by the primary LE audio headset (100), to the at least one secondary LE audio headset (300A-300B) over a secondary CIG for establishing a combined call between the primary LE audio headset (100) and the at least one secondary LE audio headset (300A-300B),
wherein receiving, by the primary LE audio headset (100), the request message for sharing the call receiving at the user device (200) with the at least one secondary LE audio headset (300A-300B) from the user device (200), comprises:
receiving, by the primary LE audio headset (100), a synchronization delay of the primary CIG from the user device (200); and
receiving, by the primary LE audio headset (100), the request message comprising a list of the at least one secondary LE audio headset (300A-300B) in proximity of the primary LE audio headset (100) from the user device (200) for creation of the secondary CIG.

2. The method as claimed in claim 1, wherein the method comprises:
optimizing, by the primary LE audio headset (100), codec configuration settings, and Quality of Service (QoS) parameters in the secondary CIG based on a number of the at least one secondary LE audio headset (300A-300B) to reduce latency in LE audio communication.

3. The method as claimed in claim 1, wherein receiving, by the primary LE audio headset (100), the request message for sharing the call ongoing at the user device (200) with the at least one secondary LE audio headset (300A-300B) from the user device (200) comprises:
receiving, by the primary LE audio headset (100), a gesture from a user; sending, by the primary LE audio headset (100), a call sharing enable request message to the user device (200), wherein the user device (200) automatically selects the at least one secondary LE audio headset (300A-300B) pre-configured at the user device (200) and located in proximity of the primary LE audio headset (100) upon receiving the call sharing enable request message and sends the request message; and
receiving, by the primary LE audio headset (100), the request message from the user device (200).

4. The method as claimed in claim 1, wherein the call receiving at the user device (200) is an ongoing call or an incoming call.

5. A primary Low Energy, LE, audio headset (100) for call sharing, comprises:
a memory (120);
a processor (130); and
a call sharing controller (110), coupled to the memory (120) and the processor (130), configured for:
receiving (301) a request message for sharing a call receiving at a user device (200) with at least one secondary LE audio headset (300A-300B) from the user device (200), wherein the primary LE audio headset (100) is connected with the user device (200) over a primary Connected Isochronous Group, CIG, and
connecting (302) to the at least one secondary LE audio headset (300A-300B) over a secondary CIG for establishing a combined call between the primary LE audio headset (100) and the at least one secondary LE audio headset (300A-300B),
wherein receiving the request message for sharing the call receiving at the user device (200) with the at least one secondary LE audio headset (300A-300B) from the user device (200), comprises:
receiving a synchronization delay of the primary CIG from the user device (200); and receiving the request message comprising a list of the at least one secondary LE audio headset (300A-300B) in proximity of the primary LE audio headset (100) from the user device (200) for creation of the secondary CIG.

## Patentansprüche

1. Verfahren zur Anrufteilung zwischen Low-Energy (LE)-Audio-Headsets (100, 300A-300B), umfassend:
Empfangen (301) einer Anforderungsnachricht von einem Benutzergerät (200) durch ein primäres LE-Audio-Headset (100), das über eine primäre Connected Isochronous Group (CIG) mit dem Benutzergerät (200) verbunden ist, zum Teilen eines am Benutzergerät (200) empfangenen Anrufs mit mindestens einem sekundären LE-Audio-Headset (300A-300B); und
Verbinden (302) durch das primäre LE-Audio-Headset (100) mit dem mindestens einen sekundären LE-Audio-Headset (300A-300B) über eine sekundäre CIG zum Aufbau eines kombinierten Anrufs zwischen dem primären LE-Audio-Headset (100) und dem mindestens einen sekundären LE-Audio-Headset (300A-300B),
wobei das Empfangen der Anforderungsnachricht zum Teilen des am Benutzergerät (200) empfangenen Anrufs mit dem mindestens einen sekundären LE-Audio-Headset (300A-300B) vom Benutzergerät (200) durch das primäre LE-Audio-Headset (100) Folgendes umfasst:
Empfangen einer Synchronisationsverzögerung der primären CIG vom Benutzergerät (200) durch das primäre LE-Audio-Headset (100); und
Empfangen der Anforderungsnachricht, die eine Liste des mindestens einen sekundären LE-Audio-Headsets (300A-300B) in der Nähe des primären LE-Audio-Headsets (100) umfasst, vom Benutzergerät (200) durch das primäre LE-Audio-Headset (100) zum Erstellen der sekundären CIG.

2. Verfahren nach Anspruch 1, wobei das Verfahren Folgendes umfasst:
Optimieren von Codec-Konfigurationseinstellungen und Quality-of-Service (QoS)-Parametern in der sekundären CIG durch das primäre LE-Audio-Headset (100) auf der Grundlage einer Anzahl von mindestens einem sekundären LE-Audio-Headset (300A-300B), um die Latenz in der LE-Audiokommunikation zu reduzieren.

3. Verfahren nach Anspruch 1, wobei das Empfangen der Anforderungsnachricht zum Teilen des auf dem Benutzergerät (200) laufenden Anrufs mit dem mindestens einen sekundären LE-Audio-Headset (300A-300B) vom Benutzergerät (200) durch das primäre LE-Audio-Headset (100) Folgendes umfasst:
Empfangen einer Geste von einem Benutzer durch das primäre LE-Audio-Headset (100); Senden einer Anforderungsnachricht zum Freigeben der Anrufteilung durch das primäre LE-Audio-Headset (100) an das Benutzergerät (200), wobei das Benutzergerät (200) beim Empfang der Anforderungsnachricht zum Freigeben der Anrufteilung automatisch das mindestens eine sekundäre LE-Audio-Headset (300A-300B) auswählt, das auf dem Benutzergerät (200) vorkonfiguriert ist und sich in der Nähe des primären LE-Audio-Headsets (100) befindet, und die Anforderungsnachricht sendet; und
Empfangen der Anforderungsnachricht vom Benutzergerät (200) durch das primäre LE-Audio-Headset (100).

4. Verfahren nach Anspruch 1, wobei der am Benutzergerät (200) empfangener Anruf ein laufender Anruf oder ein eingehender Anruf ist.

5. Primäres Low-Energy (LE)-Audio-Headset (100) für die Anrufteilung, umfassend:
einen Speicher (120);
einen Prozessor (130); und
eine Anrufteilungssteuerung (110), die mit dem Speicher (120) und dem Prozessor (130) gekoppelt und für Folgendes konfiguriert ist,
Empfangen (301) einer Anforderungsnachricht zum Teilen eines bei einem Benutzergerät (200) empfangenen Anrufs mit mindestens einem sekundären LE-Audio-Headset (300A-300B) vom Benutzergerät (200), wobei das primäre LE-Audio-Headset (100) über eine primäre Connected Isochronous Group (CIG) mit dem Benutzergerät (200) verbunden ist, und
Verbinden (302) mit dem mindestens einen sekundären LE-Audio-Headset (300A-300B) über eine sekundäre CIG zum Aufbau eines kombinierten Anrufs zwischen dem primären LE-Audio-Headset (100) und dem mindestens einen sekundären LE-Audio-Headset (300A-300B),
wobei das Empfangen der Anforderungsnachricht zum Teilen des am Benutzergerät (200) empfangenen Anrufs mit dem mindestens einen sekundären LE-Audio-Headset (300A-300B) vom Benutzergerät (200) Folgendes umfasst:
Empfangen einer Synchronisationsverzögerung der primären CIG vom Benutzergerät (200); und Empfangen der Anforderungsnachricht, die eine Liste des mindestens einen sekundären LE-Audio-Headsets (300A-300B) in der Nähe des primären LE-Audio-Headsets (100) umfasst, vom Benutzergerät (200) zum Erstellen der sekundären CIG.

## Revendications

1. Procédé de partage d'un appel entre des casques audio à faible consommation d'énergie, LE, (100, 300A-300B), comprend :
recevoir (301), par un casque audio LE primaire (100) connecté à un équipement utilisateur (200) par l'intermédiaire d'un Groupe Isochrone Connecté primaire, CIG, un message de demande de partage d'un appel reçu sur l'équipement utilisateur (200) avec au moins un casque audio LE secondaire (300A-300B) depuis l'équipement utilisateur (200) ; et
connecter (302), par le casque audio LE primaire (100), à l'au moins un casque audio LE secondaire (300A-300B) par l'intermédiaire d'un CIG secondaire pour établir un appel combiné entre le casque audio LE primaire (100) et l'au moins un casque audio LE secondaire (300A-300B),
dans lequel l'opération de recevoir, par le casque audio LE primaire (100), le message de demande de partage de l'appel reçu sur l'équipement utilisateur (200) avec l'au moins un casque audio LE secondaire (300A-300B) depuis l'équipement utilisateur (200), comprend :
recevoir, par le casque audio LE primaire (100), un délai de synchronisation du CIG primaire depuis l'équipement utilisateur (200) ; et
recevoir, par le casque audio LE primaire (100), le message de demande comprenant une liste de l'au moins un casque audio LE secondaire (300A-300B) à proximité du casque audio LE primaire (100) depuis l'équipement utilisateur (200) pour créer le CIG secondaire.

2. Procédé selon la revendication 1, dans lequel le procédé comprend :
optimiser, par le casque audio LE primaire (100), des définitions de configuration de codec et des paramètres de Qualité de Service (QoS) dans le CIG secondaire en fonction d'un nombre de l'au moins un casque audio LE secondaire (300A-300B) pour réduire la latence dans la communication audio LE.

3. Procédé selon la revendication 1, dans lequel l'opération de recevoir, par le casque audio LE primaire (100), le message de demande de partage de l'appel en cours sur l'équipement utilisateur (200) avec l'au moins un casque audio LE secondaire (300A-300B) depuis l'équipement utilisateur (200), comprend :
recevoir, par le casque audio LE primaire (100), un geste depuis un utilisateur ; envoyer, par le casque audio LE primaire (100), un message de demande permettant un partage d'un appel à l'équipement utilisateur (200), l'équipement utilisateur (200) sélectionnant automatiquement l'au moins un casque audio LE secondaire (300A-300B) pré-configuré sur l'équipement utilisateur (200) et situé à proximité du casque audio LE primaire (100) après avoir reçu le message de demande permettant un partage d'un appel et envoyant le message de demande ; et
recevoir, par le casque audio LE primaire (100), un message de demande depuis l'équipement utilisateur (200).

4. Procédé selon la revendication 1, dans lequel la réception d'appel sur l'équipement utilisateur (200) est un appel en cours ou un appel entrant.

5. Casque audio à faible consommation d'énergie, LE, primaire (100) pour partage d'un appel, comprend :
une mémoire (120) ;
un processeur (130) ; et
un contrôleur de partage d'appel (110), couplé à la mémoire (120) et au processeur (130), configuré pour :
recevoir (301) un message de demande de partage d'un appel reçu sur un équipement utilisateur (200) avec au moins un casque audio LE secondaire (300A-300B) depuis l'équipement utilisateur (200), dans lequel le casque audio LE primaire (100) connecté à l'équipement utilisateur (200) par l'intermédiaire d'un Groupe Isochrone Connecté primaire, CIG, et
connecter (302) à l'au moins un casque audio LE secondaire (300A-300B) par l'intermédiaire d'un CIG secondaire pour établir un appel combiné entre le casque audio LE primaire (100) et l'au moins un casque audio LE secondaire (300A-300B),
dans lequel l'opération de recevoir le message de demande de partage de l'appel reçu sur l'équipement utilisateur (200) avec l'au moins un casque audio LE secondaire (300A-300B) depuis l'équipement utilisateur (200), comprend :
recevoir un délai de synchronisation du CIG primaire depuis l'équipement utilisateur (200) ; et recevoir le message de demande comprenant une liste de l'au moins un casque audio LE secondaire (300A-300B) à proximité du casque audio LE primaire (100) depuis l'équipement utilisateur (200) pour créer le CIG secondaire.
